# EUROPÄISCHE PATENTSCHRIFT

(11) **EP 1 004 244 B1**
(45) Veröffentlichungstag und Bekanntmachung des Hinweises auf die Patenterteilung: **07.05.2003**
(21) Anmeldenummer: 99122219.1
(22) Anmeldetag: 06.11.1999
(51) Int. Cl.: A23G 1/18

(54) **Vorrichtung zum kontinuierlichen Aufbereiten von zu verarbeitenden kakaobutterhaltigen oder ähnlichen fetthaltigen Massen**
Apparatus for continuous preparation and processing of cocoa butter or similar fat-containing mass
Appareil pour la préparation et la mise en oeuvre continue de matière contenant du beurre de cacao ou une graisse analogue

(30) Priorität: 24.11.1998 DE 19854204
(43) Veröffentlichungstag der Anmeldung: 31.05.2000
(73) Patentinhaber: Sollich KG, 32105 Bad Salzuflen (DE)
(72) Erfinder: Heyde, Hans, 49134 Wallenhorst (DE)
(74) Vertreter: Patentanwälte Rehberg + Hüppe

(56) Entgegenhaltungen:
- EP-A- 0 806 149
- WO-A-85/03996
- WO-A-92/00015
- WO-A-97/25578
- GB-A- 644 312
- US-A- 3 770 252
- US-A- 4 279 295
- US-A- 4 648 315
- US-A- 4 859 483

## Beschreibung

Die Erfindung betrifft eine Vorrichtung zum kontinuierlichen Aufbereiten von zu verarbeitenden kakaobutterhaltigen oder ähnlichen fetthaltigen Massen, insbesondere Schokolademasse, mit einer Temperiersäule, die mehrere, einen Zylinder bildende, übereinander angeordnete und an einen Kreislauf für ein Temperiermedium angeschlossene Kammern aufweist, wobei zwischen zwei benachbarten Kammern ein im wesentlichen von Temperierflächen der beiden Kammern begrenzter und von der Masse durchströmter Temperierraum gebildet ist, in dem eine angetriebene Scheibe angeordnet ist, die auf ihrem äußeren oder inneren Umfang Aussparungen für den Übertritt der Masse von der Unterseite der Scheibe auf deren Oberseite und auf ihren beiden Oberflächen Abstreiferstege aufweist, die berührungslos an den Temperierflächen der Kammern entlangstreichen und dabei die Masse von der Temperierfläche abstreifen. Die Erfindung läßt sich bei jeder Massekammer anwenden, gleichgültig, ob die Massekammer einer Kühlzone oder Kühletage, einer Kristallisierzone oder -etage oder einer Nachwärmzone oder -etage zugeordnet ist. Bei dem Temperiermedium kann es sich also entweder um ein Kühlmedium oder um ein Wärmemedium handeln. In der Regel wird als Temperiermedium Wasser eingesetzt. Für die Erfindung ist es auch gleichgültig, ob die beiden der Massekammer benachbarten Kammern an gleiche oder unterschiedliche Temperierkreisläufe angeschlossen sind.

Aus der US 4,648,315 ist eine Vorrichtung zum kontinuierlichen Aufbereiten von zu verarbeitenden kakaobutterhaltigen oder ähnlichen fetthaltigen Massen bekannt, bei der eine Temperiersäule aus flachen, aufeinander aufgeschichteten Elementen Anwendung findet, wobei jeweils eine von einem Temperiermedium durchflossene Kammer mit einer Massekammer abwechselt. Die Kammern sind als scheibenartige Hohlkörper ausgebildet. Die Temperierkammern sind an Temperierkreisläufe angeschlossen. Die Massekammern stehen untereinander in Verbindung, wobei der Übertritt der Masse von einer Massekammer in die benachbarte Massekammer im Bereich des inneren Umfangs einer Antriebswelle realisiert ist, die in der Achse der Temperiersäule durch diese hindurchreicht. In jeder Massekammer sind zwei scheibenartige Körper vorgesehen, die über die Achse angetrieben werden. Die beiden scheibenartigen Körper besitzen auf ihrem äußeren Umfang Aussparungen für den Übertritt der Masse von der Unterseite der einen Scheibe auf die Oberseite der anderen Scheibe. Die beiden scheibenartigen Körper sind auf ihrer den Temperierflächen der benachbarten Kammern zugekehrten Seiten mit spiralartig angeordneten Abstreiferstegen versehen, die länger als der Radius der Scheibe ausgebildet sind und in einem solchen Drehsinn angeordnet sind, daß sie eine Förderwirkung auf die Masse ausüben. Zwei benachbarte spiralartige Abstreiferstege bilden einen von außen nach innen bzw. von innen nach außen durchgehenden Kanal, in welchem die Masse gefördert wird, ohne daß die Masse die Möglichkeit hätte, mit der Masse anderer Kanäle in Kontakt zu kommen oder sich auszutauschen. Die Abstreiferstege streichen berührungslos an den Temperierflächen der Kammern entlang und streifen Masse von den Temperierflächen ab. Die beiden scheibenartigen Körper besitzen auf den beiden einander zugekehrten Seiten in jeder Massekammer radial angeordnete und im wesentlichen von innen nach außen durchgehende Stege, die eine Mischwirkung auf die Masse ausüben sollen. Es besteht jedoch die Gefahr, daß sich hier zwischen den scheibenartigen Körpern tote Zonen bilden, in denen sich Masse ablagert, so daß die beiden scheibenartigen Körper nur noch auf ihren den Temperierflächen zugekehrten Außenseiten von Masse überströmt werden. Eine nennenswerte Mischwirkung auf die Masse in der Massekammer wird über diese beiden Scheiben nicht ausgeübt.

Um diesen Nachteilen entgegenzuwirken, ist bereits eine Vorrichtung der eingangs beschriebenen Art bekannt, bei der anstelle von zwei scheibenartigen Körpern nur noch ein einziger scheibenartiger Körper in je einer Massekammer untergebracht ist. Diese angetriebene Scheibe besitzt auf ihrem äußeren Umfang Aussparungen für den Übertritt der Masse von der Unterseite der Scheibe auf deren Oberseite. Die beiden Oberflächen der Scheibe sind mit spiralförmig angeordneten Abstreiferstegen besetzt, wobei benachbarte Abstreiferstege je einen Kanal einschließen, der auf die Masse eine Förderwirkung ausübt. Die Abstreiferstege streichen berührungslos an den Temperierflächen der Kammern entlang und streifen dabei die Masse von der Temperierfläche ab, um sie von innen nach außen bzw. von außen nach innen zu fördern. Der Übertritt der Masse von Massekammer zu Massekammer geschieht auch hier innen an der Scheibe, also im Bereich der Antriebsachse für die Scheibe, während die Scheiben auf dem äußeren Umfang Aussparungen für den Übertritt der Masse von der Unterseite der Scheibe auf deren Oberseite aufweisen. Auch hier üben die Abstreiferstege infolge ihrer kanalbildenden Zuordnung eine erhebliche Förderwirkung auf die Masse aus. Vorteilhaft wird damit eine Zwangsbewegung und Führung der Masse durch die Vorrichtung realisiert, so daß die Masse gleichmäßig durch die Vorrichtung geführt wird. Dies bedeutet, daß Masseelemente, die vergleichsweise zuerst in die Vorrichtung gelangen, auch zuerst wieder aus der Vorrichtung herausgelangen und somit die Durchlaufzeit für alle Masseelemente konstant ist. Die bekannte Vorrichtung mit der Scheibe in dem von der Masse durchströmten Temperierraum jeder Massekammer hat aber den großen Nachteil, daß im Bereich jedes Temperierraums keine nennenswerte Vermischung der Masse stattfindet. Dies ist nachteilig, weil die einzelnen Massepartikel in dem Temperierraum je nach ihrer Entfernung von den beiden Temperierflächen unterschiedliche Temperaturen annehmen. Dabei besteht die Gefahr, daß für ausgedehnte Massebereiche die kritische Massetemperatur, bei der eine Kristallbildung im Bereich einer Kühlzone oder einer Kristallisierzone noch zu erwarten ist, überschritten wird. Wenn eine derart ausgestattete Massekammer bzw. ein Temperierraum im Bereich einer Kühlzone oder einer Kristallisierzone eingesetzt wird, ist keine Gewähr dafür gegeben, daß eine ausreichende Anzahl stabiler β-Kristalle gebildet wird, die aber für die Kristallisierung der temperierten Masse und damit die Qualität des erzeugten Produktes bestimmend ist.

Aus der EP 0 289 849 A2 und der EP 0 806 149 A2 sind ebenfalls Vorrichtungen zum kontinuierlichen Aufbereiten von z. B. Schokolademasse bekannt, die mit einer Temperiersäule arbeiten, die aus mehreren, einen Zylinder bildenden, übereinander angeordneten Kammern bestehen. Die Kammern sind teilweise an einen Kühlkreislauf für ein Kühlmedium und teilweise an einen Wärmekreislauf eines Wärmemediums angeschlossen. Zwischen zwei benachbarten Kammern wird ein Temperierraum gebildet, der von der Masse durchströmt wird und der von Temperierflächen begrenzt wird, die von den benachbarten Kammern gebildet sind. In jedem Temperierraum befindet sich ein angetriebenes Rührwerkzeug, welches aus einer Nabe und einer Anzahl radial abstehender Arme besteht, wobei die Anzahl der Arme in der Regel zwischen 2 und 4 schwankt. Jeder Arm ist auf seiner Oberseite und auf seiner Unterseite mit Mischschaufeln besetzt, die auf die Masse eine Mischwirkung ausüben. Die Mischschaufeln erfüllen auch die Funktion der Abstreifer von den Temperierflächen, d. h. sie sind mit radialer Überdeckung zueinander an den Armen vorgesehen. Die Mischschaufeln können gestreckte Gestalt, aber auch konvexe oder konkave Form aufweisen. Die Formgebung und Ausrichtung der Mischschaufeln ist auf einer Seite der Arme immer gleich, während sie auf der anderen Seite der Arme ebenfalls gleich, aber entgegengesetzt ausgebildet sind. Die Arme können zusätzlich mit Durchbrechungen versehen sein, um die Durchmischungswirkung zu fördern. Die Mischschaufeln erfüllen neben der Abstreiffunktion in erster Linie eine Mischfunktion. Die wesentliche Förderung der Masse durch die Vorrichtung und damit auch von Massekammer zu Massekammer wird durch eine Massepumpe bewirkt, die die flüssige Masse durch die Vorrichtung drückt. Nachteilig an diesen mit Mischschaufeln besetzten Rührarmen ist es, daß sich an den verschiedensten Stellen der Massekammern Bereiche ausbilden können, in denen Masseteile ungleich lang verweilen. Es ist damit nicht sichergestellt, daß die Masse, die zuerst in die Vorrichtung eintritt, auch die Vorrichtung als erstes wieder verläßt. Weiterhin besteht die Gefahr, daß durch die Ausbildung der Rührarme Masseportionen zwischen den Rührarmen durch die angetriebenen Rührarme in einer fortgesetzt kreisartigen Bewegung in der Massekammer verbleiben und an der Durchströmung der Vorrichtung nicht mehr oder nur bedingt teilnehmen. In solchen unterschiedlich bewegten Massebereichen können sich auch unterschiedliche Temperaturen der Masse ausbilden, die beispielsweise für ein optimales Kristallwachstum nicht förderlich sind. Wenn gar die Verbindungsstellen, an denen die Masse von einer Massekammer in die benachbarte Massekammer übertritt, immer außen, also immer im Bereich des äußeren Umfangs des scheibenartigen Temperierraums angeordnet sind, besteht die Gefahr, daß sich eine Kurzschlußströmung der Masse durch die Vorrichtung einstellt. Bereiche des Temperierraums, die auf vergleichsweise kleinerem Radius oder gar innen liegen, nehmen dann an der Durchströmung nicht mehr teil. Dies gilt auch dann, wenn die Massedurchtritte von Massekammer zu Massekammer um 180° versetzt gegeneinander angeordnet sind. Wenn dagegen die Verbindungsstellen von Massekammer zu Massekammer einmal auf dem äußeren Umfang und dann nachfolgend auf dem inneren Umfang usw. angeordnet sind, ist die Durchströmung der Massekammer bereits erheblich verbessert.

Der Erfindung lieqt die Aufgabe zugrunde, eine Vorrichtung der eingangs beschriebenen Art aufzuzeigen, bei der in jedem Temperierraum sowohl die Vorteile einer Zwangsführung der Masse als auch einer guten Durchmischung der Masse erreicht werden. Die Masse soll von den Temperierflächen abgestreift und während der Zwangsführung intensiv durchmischt werden, so daß dabei eine Vergleichmäßigung der Temperatur der Masse in der Massekammer eintritt, die sich auf die Kristallbildung, z. B. in einer Kristallisierzone, positiv auswirkt.

Erfindungsgemäß wird dies bei einer Vorrichtung der eingangs beschriebenen Art dadurch erreicht, daß als Abstreiferstege eine Vielzahl von Mischschaufeln vorgesehen ist, die eine kleinere Erstreckung als der Radius der Scheibe aufweisen und an der Oberseite und der Unterseite der Scheibe über den Umfang der Scheibe ohne gegenseitige Kanalbildung verteilt angeordnet sind.

Die Erfindung geht von dem Gedanken aus, den Temperierraum durch die Verwendung einer einzigen Scheibe in zwei voneinander getrennte Räume zu unterteilen, wobei die Scheibe am äußeren oder inneren Umfang Aussparungen aufweist, die den Übertritt der Masse z. B. von der Unterseite der Scheibe auf die Oberseite der Scheibe ermöglichen. Sinnvoll ist es, wenn der Masseeingang und der Masseausgang an der Vorrichtung zentrisch angeordnet sind. Dann sind auch die Verbindungsstellen von Temperierraum zu Temperierraum zentrisch, also radial innen, angeordnet und die Aussparungen für den Übertritt der Masse an der Scheibe sind an allen Scheiben der Vorrichtung radial außen positioniert. Aber auch die umgekehrte Anordnung ist möglich. Geringfügige Durchbrechungen in der Scheibe stören diesen Vorgang nicht. Damit ist zunächst einmal sichergestellt, daß die Masse einer Zwangsströmung unterliegt, also zunächst beispielsweise den von der Unterseite der Scheibe und der einen Temperierfläche begrenzten Teil des Temperierraums und erst anschließend den anderen Teil doeses Temperierraums durchströmt. Wenn, wie beschrieben, nun noch die Verbindungsstellen bzw. die Durchtrittsverbindungen von Temperierraum zu Temperierraum entweder alle am inneren Umfang oder alle am äußeren Umfang angeordnet sind, wird die perfekte Zwangsströmung nach dem Prinzip des first in/first out realisiert. Die Förderwirkung auf die Masse im Sinne dieser Zwangsströmung wird von der Massepumpe erbracht. Auf der im wesentlichen über die Fläche durchgehenden einzigen Scheibe in jedem Temperierraum sind eine Vielzahl von Mischschaufeln vorgesehen. Bei diesen Mischschaufeln handelt es sich um relativ viele kleine Körper oder Elemente, die wandartig oder schaufelartig ausgebildet sind und deren Erstreckung wesentlich kleiner als der Radius der Scheibe ist. Diese Mischschaufeln sind unter relativ großer gegenseitiger Entfernung so auf der Oberseite und der Unterseite der Scheibe angeordnet, daß sie miteinander keine nennenswerte Kanalbildung erbringen, sondern die zu temperierende Masse gleichsam ablenken und umpflügen, so daß hieraus eine intensive Durchmischung der Masse resultiert. Die von den Mischschaufeln ausgeübte Förderwirkung für die Zwangsdurchströmung der Temperierräume ist vernachlässigbar. Die Mischschaufeln können zwar grundsätzlich so ausgebildet sein, wie dies für Mischschaufeln auf Rührarmen im Stand der Technik bereits bekannt ist. Durch ihr Zusammenwirken mit der einzigen Scheibe in jedem Temperierraum erbringen sie in der Kombination jedoch eine Wirkung, die die Vorteile der Zwangsführung und der intensiven Durchmischung ermöglicht, ohne deren Nachteile miteinander zu kombinieren. Es versteht sich, daß die Mischschaufeln neben der Mischfunktion auch die Abstreiffunktion der Masse von den Temperierflächen zu erbringen haben. Die Mischschaufeln müssen nicht radial zueinander angeordnet und ausgerichtet sein, wie dies bei ihrer Anordnung auf den Armen der Fall ist, sondern sie sind über die Fläche der Scheibe an der Oberseite und der Unterseite verteilt angeordnet. Diese verteilte Anordnung kann in verschiedener Weise erfolgen. Sinn dieser Verteilung ist es in allen Fällen, die einzelnen Massebereiche immer wieder intensiv zu durchmischen, und zwar während der Zwangsführung auf der Unter- oder Oberseite der Scheibe radial von außen nach innen bzw. von innen nach außen. Die wesentliche Wirkung der Mischschaufeln ist neben der Abstreifwirkung die Mischwirkung. Eine geringfügige Förderwirkung der Mischschaufeln ist jedoch unschädlich, gleichgültig, ob diese Förderwirkung in Förderrichtung oder entgegen der Förderrichtung auftritt.

Auf der Oberseite und der Unterseite der Scheibe können jeweils zwei Arten der Mischschaufeln über den Umfang der Scheibe verteilt vorgesehen sein, von denen die eine Art auf die Masse eine radial nach außen gerichtete und die andere Art eine radial nach innen gerichtete Mischbewegung ausübt. Gerade durch dieses Gegeneinanderarbeiten der beiden Arten von Mischschaufeln wird die intensive Mischung der Masse verstärkt, und zwar sowohl im Bereich der Unterseite der Scheibe wie auch im Bereich der Oberseite der Scheibe. Die Anordnung der Mischschaufeln an der Scheibe kann durchaus symmetrisch zu der Ebene der Scheibe sein. Die Masse nimmt infolge der intensiven Durchmischung in allen Querschnitten eine zum Stand der Technik vergleichsweise konstantere Temperatur an. Damit kann bei Anwendung der Erfindung in einer Kühlzone oder einer Kristallisierzone gezielt auf eine hinreichende Vorkristallisierung durch Bildung von Kristallkeimen in hinreichender Anzahl Einfluß genommen werden. Aber auch wenn die Erfindung im Bereich einer Wärmezone Anwendung findet, ist es förderlich, wenn die einzelnen Massebereiche in ihren Temperaturen nicht allzu unterschiedlich sind, um auch das Aufschmelzen unstabiler Kristalle in einer solchen Nachwärmzone zu vergleichmäßigen. Es tritt der überraschende Vorteil ein, daß die Vorrichtung mit gegenüber dem Stand der Technik vergleichsweise höheren Massetemperaturen in den Temperierräumen gefahren werden kann, ohne daß kritische Massetemperaturen überschritten werden. Dies bedeutet gleichzeitig, daß die Vorrichtung im Teillastbetrieb stabiler arbeitet.

Die Mischschaufeln können auf der Scheibe gruppenweise auf Kreisringen angeordnet sein. Bei diesen Kreisringen handelt es sich um gedachte Bereiche auf konstantem Radius um die Antriebsachse der Welle für die Scheiben. So ist es beispielsweise möglich, auf je einem Radius Mischschaufeln der einen Art und auf dem benachbarten Radius Mischschaufeln der anderen Art anzuordnen. Es ist aber auch möglich, die Mischschaufeln auf jedem Kreisring gemischt anzuordnen und vorzusehen. Die Mischschaufeln können verschiedene Gestalt haben, beispielsweise als kurze, an den Enden abgerundete oder zugeschärfte Wandungsteile vorgesehen sein. Sie können aber auch eine konkave oder konvexe Gestalt besitzen, eine flach eliptische Formgebung aufweisen o. dgl.. Besonders sinnvoll ist es, wenn die Mischschaufeln auf den Kreisringen mit nacheinander von innen nach außen und von außen nach innen wechselnder Mischrichtung angeordnet sind. Hierdurch wird eine besonders intensive Durchmischung erreicht, indem die Masseelemente von Kreisring zu Kreisring immer wieder umgewendet, umgepflügt und miteinander ausgetauscht werden.

Um eine gute Abstreifwirkung zu erzielen, sind die Mischschaufeln unter aneinander anschließender Überdeckung über den Umfang der Scheibe verteilt angeordnet, so daß bei einer Umdrehung der Scheibe die beiden Temperierflächen vollständig abgestreift werden. Dabei sind die Mischschaufeln gleichzeitig so angeordnet, daß sich keine toten Ecken oder Zonen bilden können, in denen sich Massebereiche ablagern könnten oder in denen sie länger verweilen könnten. Sinnvoll ist es, wenn die Mischschaufeln als reine Mischschaufeln ohne nennenswerte Förderwirkung ausgebildet sind. Die Zwangsförderung der Masse durch den Temperierraum wird im wesentlichen von der Massepumpe erbracht, die ohnehin bei einer solchen Vorrichtung vorgesehen ist.

Die Mischschaufeln können als schräg zur Umfangsrichtung der Kreisringe angeordnete und geradlinig verlaufende Pflugstege ausgebildet sein. Auch andere Formen sind denkbar. Die Mischschaufeln müssen sich auch nicht unbedingt senkrecht zu der Oberseite oder Unterseite der Scheibe erstrecken, sondern können auch geneigt oder geschwungen ausgebildet sein.

Es besteht die Möglichkeit, daß die Mischschaufeln auf den einzelnen Kreisringen in Umfangsrichtung mit etwa gleichem Abstand angeordnet sind. Damit wird der größeren Umfangsgeschwindigkeit auf vergleichsweise größerem Radius Rechnung getragen, wenngleich auch hier niedrigere örtliche Massegeschwindigkeiten zu erwarten sind im Vergleich zu mehr radial innen gelegenen Bereichen des Temperierraums. Es ist aber auch möglich, die Anzahl der Mischschaufeln von innen nach außen in unterschiedlichen Abständen anzuordnen, die nicht proportional dem wachsenden Umfang bzw. Radius sind. Auch die Schrägwinkel, mit denen die Mischschaufeln auf der Oberseite und der Unterseite der Scheibe angeordnet sind, können variieren. So ist es möglich, daß die Mischschaufeln auf den einzelnen Kreisringen in radialer Richtung von innen nach außen mit von Kreisring zu Kreisring kleiner bemessenen Schrägwinkeln angeordnet sind. Damit wird den unterschiedlichen Umfangsgeschwindigkeiten entgegen gewirkt.

Die auf dem äußeren Umfang der Scheibe angeordneten Aussparungen für den Übertritt der Masse von der Unterseite der Scheibe auf deren Oberseite können über den Umfang der Scheibe durchgehend vorgesehen sein. Damit ist sichergestellt, daß über den gesamten äußeren Umfang der Scheibe Masse von der Unterseite auf die Oberseite übertritt. Es versteht sich, daß damit der Masseübertritt von einer Massekammer zur anderen bzw. von einem Temperierraum zum benachbarten im Bereich des inneren Umfangs, also benachbart zu der Antriebsachse stattfindet. Wenn umgekehrt die einzelnen Massekammern außen miteinander in Verbindung stehen, müssen die Aussparungen am inneren Umfang der Scheibe vorgesehen sein, um Masse von der Unterseite der Scheibe auf die Oberseite der Scheibe übertreten zu lassen. Solche Aussparungen können nicht über den Umfang der Scheibe durchgehend vorgesehen sein, weil der Antrieb der Scheibe an dieser Stelle erfolgt.

Die Erfindung wird anhand verschiedener Ausführungsbeispiele weiter erläutert und beschrieben. Es zeigen:
- Figur 1: einen Vertikalschnitt durch die Vorrichtung in ihrer generellen Anordnung,
- Figur 2: eine Draufsicht auf eine Scheibe in einer ersten Ausführungsform,
- Figur 3: eine Draufsicht auf eine Scheibe in einer zweiten Ausführungsform,
- Figur 4: eine Draufsicht auf eine Scheibe in einer dritten Ausführungsform,
- Figur 5: einen Schnitt gemäß der Linie V-V in Figur 4,
- Figur 6: eine Draufsicht auf eine Scheibe in einer weiteren Ausführungsform,
- Figur 7: eine schnittgemäß der Linie VII-VII in Figur 6,
- Figur 8: eine Draufsicht auf eine Scheibe in einer weiteren Ausführungsform,
- Figur 9: eine weitere Ausführungsform der Scheibe,
- Figur 10: einen Schnitt durch die Scheibe in radialer Richtung zur Darstellung einer einzelnen Mischschaufel,
- Figur 11: eine ähnliche Darstellung wie Figur 10 mit einer Mischschaufel in einer anderen Gestalt, und
- Figur 12: eine weitere Ausführungsform einer Mischschaufel an der Scheibe.

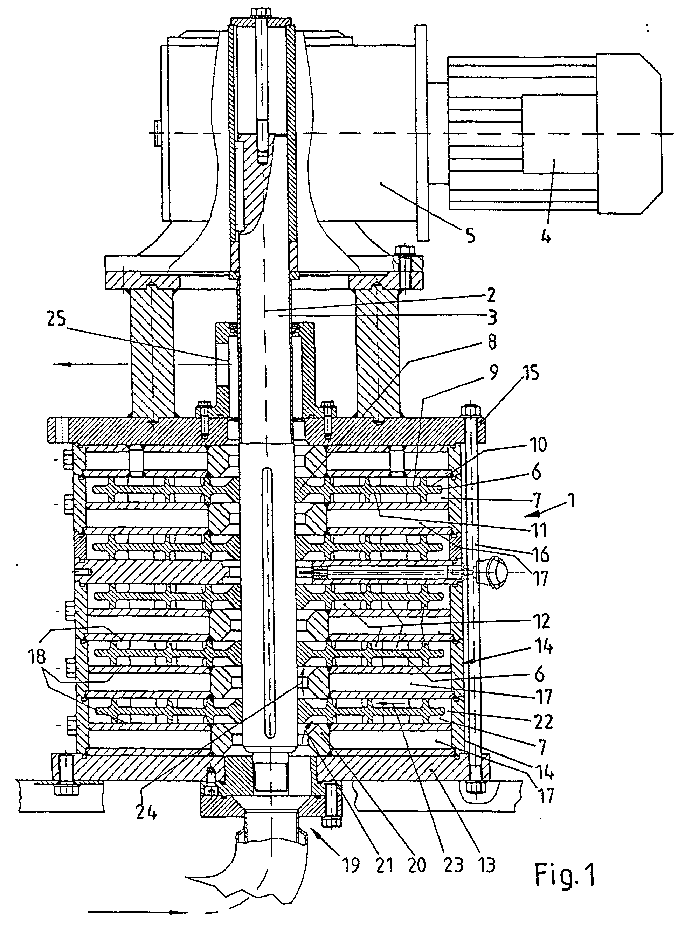

Figur 1 zeigt einen grundsätzliche Anordnungsmöglichkeit, der einzelnen Elemente der Vorrichtung, die manchmal auch als Scheibentemperer bezeichnet wird, weil mehrere scheibenartige Gebilde zu einer Temperiersäule 1 aufgebaut sind. Die Temperiersäule 1 besitzt eine vertikal angeordnete Achse 2, in der eine Welle 3, im wesentlichen über die Höhe der Vorrichtung durchgehend vorgesehen ist. Die Welle 3 wird über einen Motor 4 und ein nachgeschaltetes Untersetzungsgetriebe 5 rotierend angetrieben. Mit der Welle 3 sind Scheiben 6 drehfest verbunden, die jeweils in Temperierräumen 7 umlaufend angeordnet sind. Die Scheiben 6 sind Rührwerkzeugen vergleichbar, d. h. sie erfüllen eine rührende bzw. vermischende Wirkung. Jede Scheibe 6 weist radial innen eine Nabe 8 auf, die wie dargestellt über eine Paßfederverbindung drehfest mit der Welle 3 verbunden ist. Die Nabe 8 geht radial nach außen in einen im wesentlichen flächig ausgebildeten Grundkörper 9 der Scheibe 6 über. Der Grundkörper 9 ist im wesentlichen eben ausgebildet, besitzt nur eine vergleichsweise kleinere Höhe als der Temperierraum 7 und ist in dessen Mitte angeordnet. Der Grundkörper 9 der Scheibe 6 erstreckt sich im wesentlichen über die gesamte Fläche, d. h. er bildet eine Kreisringfläche. Der Grundkörper 9 bzw. die Scheibe 6 weist eine Oberseite 10 und eine Unterseite 11 auf. Sowohl auf der Oberseite 10 wie auch auf der Unterseite 11 des scheibenartigen Grundkörpers 9 der Scheibe 6 sind Mischschaufeln 12 angeordnet. Die Mischschaufeln 12 sind in radialer Richtung und in Umfangsrichtung über die Oberseite 10 und die Unterseite 11 verteilt angeordnet, wie dies die nachfolgenden Figuren im einzelnen erkennen lassen. In Figur 1 erkennbar, daß hier insgesamt fünf Scheiben 6 vorgesehen sind, die mit der Welle 3 drehfest verbunden sind und in soweit gemeinsam angetrieben werden.

Auch der stillstehende Teil der Vorrichtung bzw. der Temperiersäule 1 ist scheiben- bzw. abschnittartig aufgebaut. Auf einem unteren Deckel 13 sind eine Anzahl Ringe 14 übereinander aufgebaut und von einem oberen Deckel 15 mit über den Umfang angeordneten Spannschrauben 16 gehalten. In jedem Ring 14 ist eine Kammer 17 gebildet, die von einem Temperiermedium, meist Wasser, durchflossen wird. Die einzelnen übereinander befindlichen Kammern 17 sind in der Regel an unterschiedlich temperierte Kreisläufe angeschlossen und insoweit gruppenweise zusammengefaßt, wobei üblicherweise von unten nach oben eine Kühlzone, eine Kristallisationszone und eine Nachwärmzone gebildet werden. Die Darstellung der Kreisläufe und deren Anschluß an die einzelnen Kammern 17 ist hier aus Übersichtlichkeitsgründen weggelassen. Jede Kammer 17 besitzt in der Regel 2 Temperierflächen 18. Diese Temperierflächen 18 sind die freien Oberflächen der Temperierräume 7 an denen also Wärme an die durchfließende Masse abgegeben oder von der durchfließenden Masse aufgenommen wird. Zentral am unteren Deckel 13 und diesen durchsetzend ist eine Masseeingang 19 ausgebildet durch den die aufgeschmolzene Schokolademasse mit Hilfe einer nicht dargestellten Pumpe durch die Temperiersäule 1 von unten nach oben hindurchgefördert wird. Die Masse wird zunächst mit Hilfe einer Buchse 20, die die Welle 3 mit Abstand umgibt durch den Bereich der Kammer 17 geleitet und tritt dann gemäß Pfeil 21 in den untersten Temperierraum 7 ein, und zwar in den Teil des Temperierraums 7, der sich unterhalb des scheibenförmigen Grundkörpers 9 erstreckt. Die Masse kann hier nicht auf die Oberseite 10 der Scheibe 6 übertreten, sondern ist gezwungen sich entlang der untersten Temperierfläche 18 in dem Raum zwischen der Unterseite 11 der untersten Scheibe 6 und der untersten Temperierfläche 18 radial von innen nach außen zu bewegen, wobei die Masse von den dort angeordneten Mischschaufeln 12 einerseits von der untersten Temperierfläche 18 abgestreift und andererseits mit anderen Masseeinheiten intensiv durchmischt wird. Radial außen an der Scheibe 6 sind eine oder mehrere Aussparungen 22 vorgesehen, durch die hindurch die von der Pumpe geförderte Masse nunmehr in den Bereich der Oberseite 10 der untersten Scheibe 6 übertreten kann, also in den Teil des Temperierraumes 7, der zwischen der Oberseite 10 der untersten Scheibe 6 und der Temperierfläche 18 der zweituntersten Kammer 17 gebildet wird. In diesem Bereich bewegt sich nun die Masse gemäß Pfeil 23 im wesentlichen radial von außen nach innen, wobei sie auch hier über die auf der Oberseite 10 der Scheibe 6 angeordneten Mischschaufeln 12 von der Temperierfläche 18 abgenommen und intensiv durchmischt wird. Radial innen tritt dann die Masse über die nächste Buchse 20 gemäß Pfeil 24 in den zweituntersten Temperierraum 7 über. Auch an der zweituntersten Scheibe 6 wiederholt sich der beschriebene Vorgang. Die Masse bewegt sich in dem unterhalb der Unterseite 11 gebildeten Teilraum radial von innen nach außen und in dem oberhalb der Oberseite 10 der Scheibe 6 gebildeten Teilraum radial von außen nach innen. Dieser Vorgang wiederholt sich an jeder nachfolgenden Scheibe 6 bzw. in jedem nachfolgenden Temperierraum 7 von unten nach oben, bis die Masse schließlich an einem zentral angeordneten Masseausgang 25 austritt und von dort eine Verarbeitungsstelle, beispielsweise einer Überziehmaschine zugeführt wird. Man erkennt, daß bei dieser Ausführungsform der Masseeingang 19, die Buchsen 20 und der Masseausgang 25 zentral, also radial innen angeordnet sind, wobei die Buchsen 20 die inneren Verbindungs- bzw. Übertrittsstellen für die Masse bilden, während radial außen an den Scheiben 6 die Aussparungen 22 die Möglichkeit eröffnen, daß die Masse dort jeweils von der Unterseite auf die Scheibe 6 übertritt. Die Masse durchströmt damit die Temperierräume 7 in Zwangsströmung. Es bilden sich keine Nester oder tote Zonen. Sämtliche Masseelemente durchströmen die Temperiersäule 1 gleichmäßig, d. h. jedes Masseelement wird in einem gleichen Zeitraum durch die Temperiersäule 1 hindurchgeführt, so daß das Prinzip first in /first out verwirklicht ist.

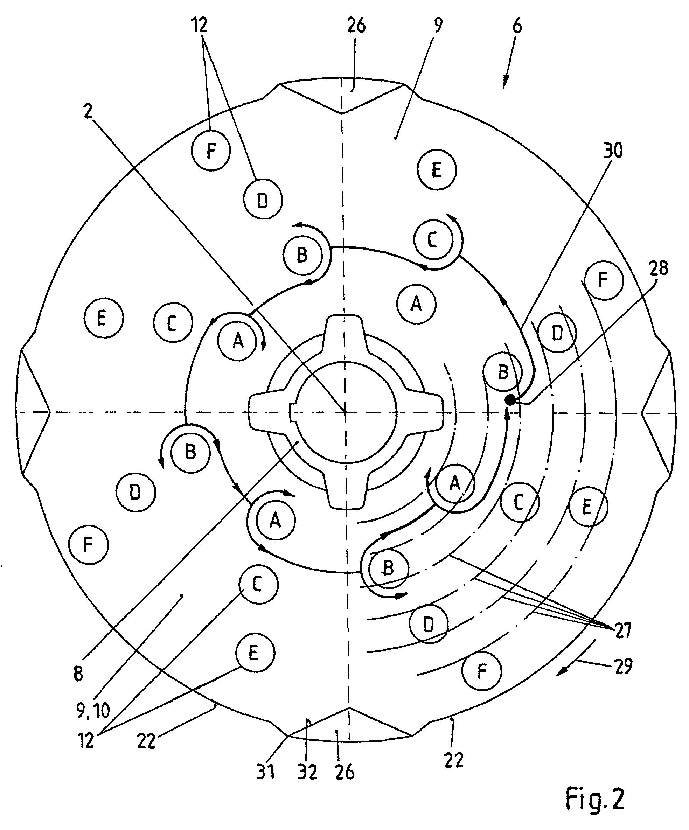

Von besonderer Bedeutung ist die Ausbildung der Scheiben 6 mit den Mischschaufeln 12. Figur 2 zeigt eine Draufsicht auf eine Scheibe 6 in vergrößernder Darstellung. Auf der Oberseite 10 des Grundkörpers 9 sind die Mischschaufeln 12, hier im wesentlichen in Form von zylinderartigen Erhebungen in der ersichtlichen Weise angeordnet. Figur 2 könnte genausogut eine Draufsicht auf die Unterseite 11 der Scheibe 6 darstellen. Es ist leicht vorstellbar, daß die Mischschaufeln 12 auf der Oberseite 10 und der Unterseite 11 der Scheibe 6 symmetrisch zur Ebene des Grundkörpers 9 angeordnet sein können, so daß die Darstellung der Mischschaufeln 12 auf Oberseite 10 und Unterseite 11 zusammenfällt. Der Grundkörper 9 der Scheibe 6 weist radial innen die Nabe 8 auf, an die sich dann radial von innen nach außen der scheibenförmige Grundkörper 9 mit den Mischschaufeln 12 anschließt. Am äußeren Umfang der Scheibe 6 sind in regelmäßiger Anordnung, d. h. hier um jeweils 90° zueinander versetzt vier Vorsprünge 26 vorgesehen, wobei zwischen benachbarten Vorsprüngen jeweils 4 Aussparungen 22 gebildet sind durch die hindurch der Massedurchtritt von der Unterseite 11 auf die Oberseite 10 der Scheibe erfolgt.

Die Mischschaufeln 12 sind in besonderer Weise angeordnet. Radial von innen nach außen sind zunächst vier Mischschaufeln 12, durch den Buchstaben A hervorgehoben auf gleichem Radius zur Achse 2 angeordnet. Man erkennt, daß diese vier mit A hervorgehobenen Mischschaufeln 12 gegeneinander um jeweils 90° versetzt angeordnet sind. Radial von innen nach außen über die Fläche des Grundkörpers 9 bzw. der Scheibe 6 verteilt bzw. nachfolgend sind wiederum vier Mischschaufeln 12, gekennzeichnet durch den Buchstaben B vorgesehen. Diese mit B gekennzeichneten Mischschaufeln 12 sind gegeneinander wiederum um 90° versetzt angeordnet und auf einem übereinstimmenden Radius vorgesehen. Die mit A und B gekennzeichneten Mischschaufeln 12 überdecken einander in tangentialer Richtung. Um dies besser erkennbar zu machen, sind über einen Teilumfang der Scheibe 6 in strichpunktierter Linienführung Kreisringe 27 angedeutet. In Fortsetzung von radial innen nach außen sind die Mischschaufeln 12 in der schon beschriebenen Weise, jeweils zu Vierergruppen, wie dargestellt vorgesehen, wobei diese Vierergruppen mit C, D, E und F hervorgehoben sind. Man erkennt, daß sich die Mischschaufeln 12 jeweils überlappen, so daß durch dies vollständige Überdeckung die Temperierfläche 18 vollständig bestrichen wird. Es ist also sichergestellt, daß an jeder radialen Stelle der Temperierfläche 18 die dort befindliche Masse von einer Mischschaufel 12 abgestreift wird. Dies ist die eine Funktion der Mischschaufeln 12. Die andere Funktion der Mischschaufeln 12 ist in einer intensiven Durchmischung der Masse zu sehen. Um dies besser verständlich zu machen, ist in Figur 2 ein Masseelement 28 hervorgehoben, welches sich vor einer durch B gekennzeichneten Mischschaufel 12 befinden möge. Wenn die Scheibe 6 gemäß Pfeil 29 umlaufend angetrieben wird, wird dies dazu führen, daß das Masseelement 28 von der B gekennzeichneten Mischschaufel 12 etwas radial nach außen verdrängt wird, wie es durch den angegebenen Bewegungspfad 30 angegeben ist. Das Masseelement 28 wird also in den Bereich eines nächsten Kreisringes 27 etwas radial von innen nach außen verlagert, obwohl die generelle Fließrichtung auf der dargestellten Oberseite 10 der Scheibe 6 radial von außen nach innen gerichtet ist. Diese generelle Fließrichtung wird durch die Pumpe der Vorrichtung bestimmt. Es sei angenommen, daß sich das Masseelement 28 dann im wesentlichen auf einer Kreisbahn bewegt, obwohl die Wirkung der Pumpe dafür sorgt, daß das Masseelement dann eine radial von außen nach innen gerichtete Bewegungskomponente erfährt. Somit wird dieses oder ein benachbartes Masselement von der mit C gekennzeichneten Mischschaufel beim Umlauf der Scheibe 6 erfaßt werden und es wird eine Aufteilung gemäß der durch Pfeile angegebenen Bewegungsbahn 30 erfolgen. Dieser Vorgang wird sich dann, wie durch den Bewegungspfad 30 hervorgehoben, an der nachfolgenden Mischschaufel B wiederholen, wobei hier ein radial nach innen verdrängtes Masseelement durch die Pfeildarstellung gekennzeichnet ist. Beim weiteren Umlauf der Scheibe geraten dann die Masseelemente in den Wirkbereich der Mischschaufeln A, B, A, B, A und so weiter. Insgesamt ist damit erkennbar, daß die Masse intensiv durchmischt wird, und zwar die gesamte Masse zwischen der Oberfläche 10 der Scheibe 6 und der jeweils angrenzenden ortsfesten Temperierfläche 18. Diese Durchmischung bzw. Durchwirbelung der Masse spielt sich an jeder der dargestellten Mischschaufeln 12 ab, so daß die Masse an allen Stellen, zumindest auf gleichen Radien gleiche Temperaturen aufweist. Ebenso wie die Mischschaufeln 12 die Masse vermischen, umpflügen bzw. durcheinandermischen, tragen auch die Vorsprünge 26 außen am Radius der Scheibe dazu bei. Die Vorsprünge 26 bilden Abstreifkanten 31 und Ablenkflächen 32, die die Masse von den ringförmigen Umfangswänden der Ringe 14 im Bereich des Temperierraums 7 immer wieder abnehmen und radial nach innen verlagern, so daß sich auch in diesem Bereich keine Anbackungen und tote Zonen für die Masse bilden können.

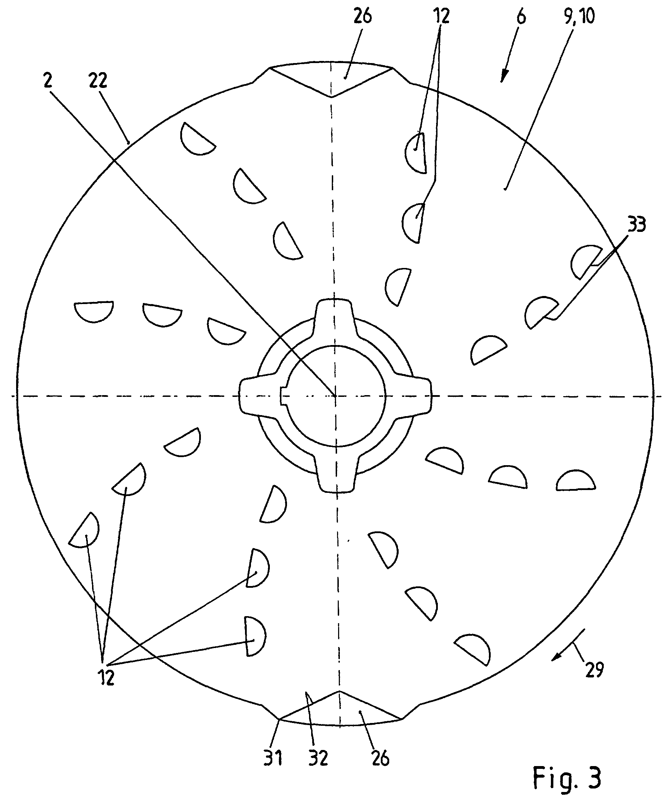

Figur 3 zeigt eine zweite Ausführungsform der Scheibe 6. Es ist erkennbar, daß hier nur zwei Vorsprünge 26 und damit auch nur zwei Aussparungen 22 außen am Umfang des Grundkörpers 9 vorgesehen sind. Die Mischschaufeln 12 sind hier etwa in Form halber zylindrischer Vorsprünge auf der Oberseite 10 der Scheibe 6 vorgesehen. Entsprechend sind auch Mischschaufeln 12 auf der Unterseite des Grundkörpers 9 angeordnet. Man erkennt auch hier, daß auf jeweils gleichem Radius vier Mischschaufeln 12 regelmäßig über den Umfang verteilt angeordnet sind, so daß die gleiche Gruppen- bzw. Anordnungswirkung, wie anhand von Figur 2 beschrieben, auftritt. Auch hier ist erkennbar, daß die Mischschaufeln 12 insgesamt so angeordnet sind, daß jede einzelne Mischschaufel 12 ihre Mischwirkung und Abstreifwirkung getrennt von anderen Mischschaufeln 12 erbringt. Die Mischschaufeln 12 bilden zueinander bzw. miteinander keine Kanäle, in der eine Abschottung von Massepartikeln gegenüber anderen Massepartikeln erfolgen würde. Die im Querschnitt halbkreisförmigen Mischschaufeln 12 weisen eine ebene Fläche 33 auf, die radial von innen nach außen in unterschiedlichen Schrägwinkeln zur radialen und damit auch zur tangentialen Richtung angeordnet sind. Diese Flächen 33 üben auf die von ihnen erfaßten Masseelemente eine radial von innen nach außen gerichtete Förderwirkung aus, also entgegengesetzt zu der allgemeinen durch die Massepumpe vorgesehen Förderrichtung. Da sich diese beiden Bewegungskomponenten an den Masselementen immer überlagern, wird bei dieser Ausführungsform die Durchlaufzeit der Masse durch den betreffenden Temperierraum 7 vergleichsweise vergrößert.

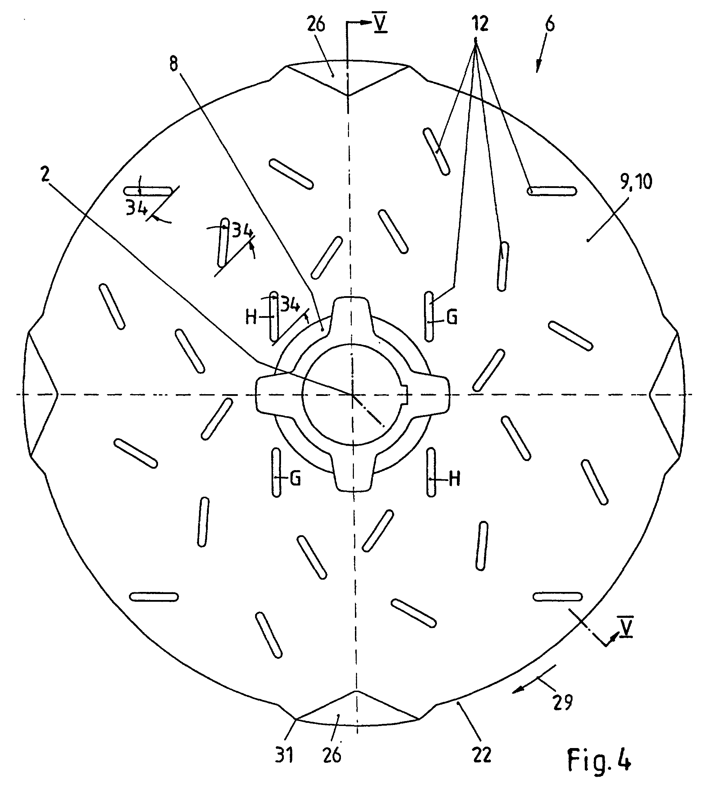

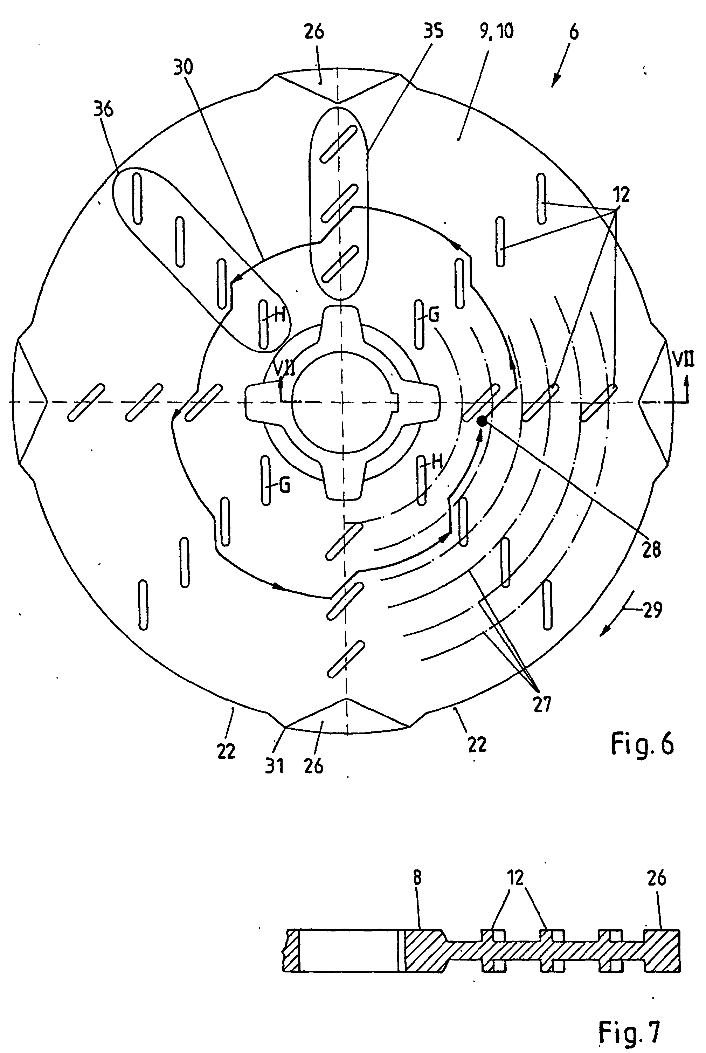

Bei der in den Figuren 4 und 5 dargestellten Ausführungsform der Scheibe 6 sind wiederum die Mischschaufeln 12 in Kreisringen 27 (Figur 2) radial und über den Umfang verteilt angeordnet. Man erkennt, daß auch hier jeweils vier Mischschaufeln auf gleichem Radius angeordnet sind. Während jedoch die Mischschaufeln gemäß Figur 2 auf das jeweils von ihnen erfaßte Masseelement eine radial nach innen bzw. nach außen gerichtete, etwa gleichgewichtig verteilte Wirkung ausüben und die Mischschaufeln 12 gemäß Figur 3 vorzugsweise eine radial von innen nach außen gerichtete überwiegende Bewegungskomponente auf die Masseelemente ausüben, sind die Mischschaufeln 12 gemäß Figuren 4 und 5 trotz etwa übereinstimmender Gestalt richtungsmäßig so angeordnet, daß einige der Mischschaufeln 12 auf das Masseelement eine radial von innen nach außen gerichtete Bewegungskomponente ausüben, während andere Mischschaufeln 12 eine radial von außen nach innen gerichtete Bewegungskomponente auf entsprechende Masseelemente erteilen. Beginnend radial innen sind auf gleichem Radius bzw. gleichem Kreisring zwei durch G gekennzeichnete Mischschaufeln und zwei mit H gekennzeichnet Mischschaufeln vorgesehen. Die Mischschaufeln G üben beim Umlauf der Scheibe 6 gemäß Pfeil 29 auf die von ihnen erfaßten Masseelemente 28 eine hauptsächlich radial von innen nach außen erfolgende Verdrängungswirkung aus, während diese Verdrängungswirkung an den mit H gekennzeichneten Mischschaufeln radial von außen nach innen gerichtet ist. Entsprechendes gilt für sämtliche Viererpaare von Mischschaufeln 12, die radial von innen nach außen folgend vorgesehen sind. Man erkennt, daß die Anzahl der Mischschaufeln G und die Anzahl der Mischschaufeln H auf der gesamten Oberfläche 10 des Grundkörpers 9 gleich ist. Auch die vier Mischschaufeln 12, die auf dem größten Radius um die Achse 2 angeordnet sind, sind jeweils um 90° gegeneinander versetzt angeordnet, so daß sich dort ein relativ großer Abstand von Mischschaufel zu Mischschaufel, betrachtet über den jeweils überstrichenen Kreisring ergibt. Dieser Abstand wächst von innen nach außen. Es ist weiterhin erkennbar, daß die Mischschaufeln 12 mit gegenseitiger Überdeckung angeordnet sind, so daß die Masse von der jeweils angrenzenden Temperierfläche 18 vollständig abstreift. Die Mischschaufeln sind hier als längliche Vorsprünge bzw. Wandstücke ausgebildet, die an ihren Enden abgerundet sind. Die Mischschaufeln 12 sind in einem übereinstimmenden Schrägwinkel 34 auf den verschiedenen Radien angeordnet bzw. positioniert. Es ist leicht vorstellbar, daß auch unterschiedliche Schrägwinkel 34 unterschiedlichen Radien zugeordnet sein könnten. Diese Anordnung unterschiedlicher Schrägwinkel kann auf die radial unterschiedlichen Durchschnittsgeschwindigkeiten der Masse abgestimmt sein.

In den Figuren 6 und 7 ist eine weitere Ausführungsform der Scheibe 6 dargestellt. Auch hier sind die Mischschaufeln 12 in Vierergruppen mit übereinstimmendem Radius auf Kreisringen 27 angeordnet, wobei die mit G gekennzeichneten Mischschaufeln jedem Masseelement 28 eine im wesentlichen nach außen gerichtete Bewegungskomponente erteilen, während die jeweils beiden anderen Mischschaufeln H im wesentlichen eine radial nach innen ausgerichtete Bewegungskomponente ausüben. Auch hier ist sehr gut die gegenseitige Überdeckung der Mischschaufeln 12 erkennbar, die über die gesamte Oberfläche der Scheibe 6 geht. Zur Verfolgung eines Masseelementes 28 ist dessen Bewegungsbahn 30 beispielhaft angegeben, die sich beim Antrieb der Scheibe gemäß Pfeil 29 ergibt. Man erkennt, daß die Mischschaufeln 12 hier radial fluchtend von innen nach außen einander zugeordnet sind. Diese Mischschaufeln besitzen übereinstimmenden Schrägwinkel 34. Die Besonderheit dieser Anordnung besteht darin, daß in Umfangsrichtung gemäß Pfeil 29 eine erste Gruppe 35 von drei Mischschaufeln vorgesehen ist, die im wesentlichen dem Masseelement 28 eine radial von außen nach innen gerichtete Bewegungskomponente erteilen. Auf die Gruppe 35 folgt beim Antrieb der Scheibe 6 gemäß Pfeil 29 eine Gruppe 36 aus vier Mischschaufeln, die den Masseelementen ebenfalls überwiegend eine radial von außen nach innen gerichtete Bewegungkomponente vermittelt. In Umfangsrichtung weitergesehen folgen dann wiederum zwei Gruppen aus drei und vier Mischschaufeln, die jedoch beide im wesentlichen eine radial von innen nach außen gerichtete Bewegungskomponente erteilen. Entsprechend ist die Anordnung der Mischschaufeln 12 über den gesamten Umfang. Man erkennt auch hier, daß die Anzahl der Mischschaufeln insgesamt, die den Masseelementen 28 eine radial von außen nach innen gerichtete Bewegungskomponente erteilen gleich groß ist wie die Anzahl der Mischschaufeln, die dies in radialer Richtung von innen nach außen bewirkt.

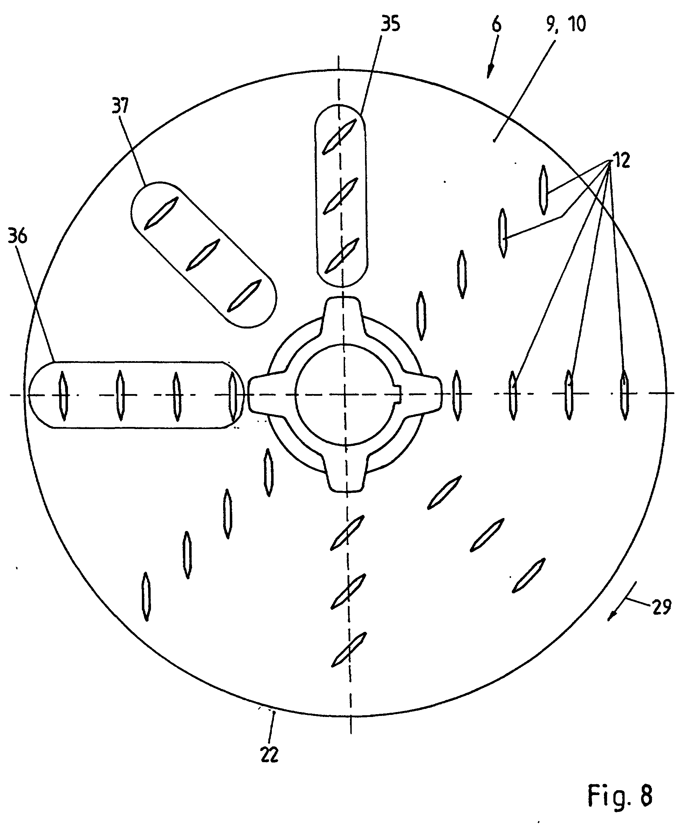

Ganz ähnlich wie die Ausführungsform gemäß den Figuren 6 und 7 ist die Ausführungsform gemäß Figur 8. Auch hierbei sind die Mischschaufeln 12 in radialer Richtung über die Kreisringe 27 hinweg radial fluchtend angeordnet. Dabei wechselt jedoch eine Gruppe 35 mit einer Gruppe 37, gefolgt von einer Gruppe 36 und so weiter. Zwischen jeder Gruppe 35, 37, 36 kehrt sich die den Masseelementen erteilten Bewegungskomponenten, die jeweils überwiegen, um. Die Scheibe 6 und der Grundkörper 9 weist die Besonderheit auf, daß hier die Vorsprünge 26 fehlen, so daß insgesamt über den Umfang umlaufend eine zusammenhängende Aussparung 22 für den Durchtritt der Masse von der Unterseite zur Oberseite der Scheibe 6 ermöglicht ist. Auch besitzen die Mischschaufeln 12 eine etwas abgewandelte Gestalt. Sie sind als langgestreckte Wandung mit zugeschärften Endbereichen ausgebildet.

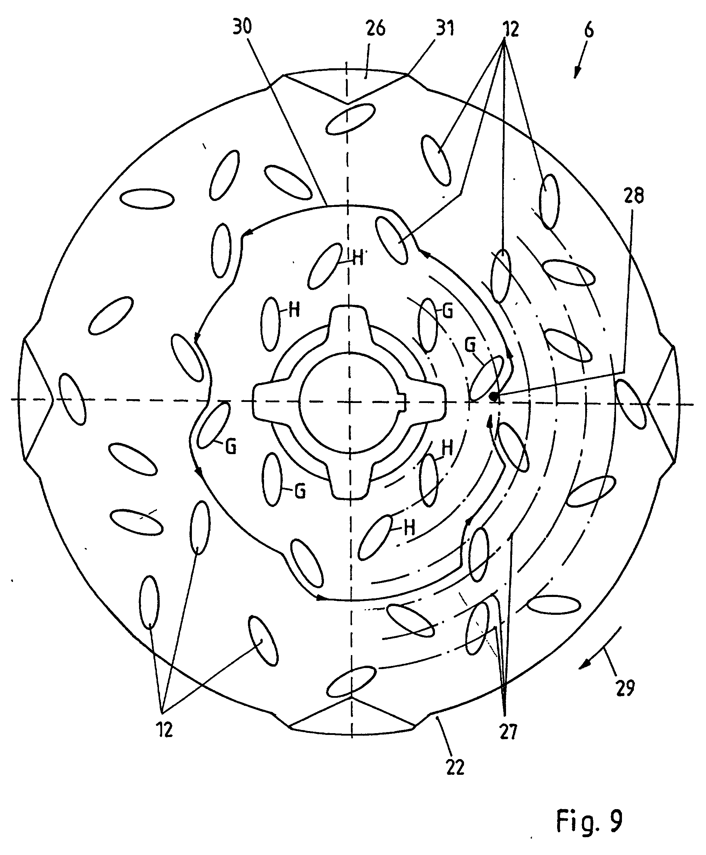

Die Ausführungsform der Scheibe 6 gemäß Figur 9 schließt an die Ausführungsform gemäß den Figuren 4 und 5 an. Auch hier sind Vierergruppen von Mischschaufeln 12 bei radialer Betrachtungsweise auf jeweils einem Kreisring 27 vorgesehen. Jedenfalls ist dies in einem radial inneren Bereich der Scheibe 6 so durchgeführt. In einem radial äußeren Bereich ist die Anzahl der Mischschaufeln über den Umfang pro Kreisring 27 erhöht, um dem Umstand Rechnung zu tragen, daß die durchschnittliche Massegeschwindigkeit in diesem radial äußeren Bereich geringer ist als im inneren Bereich.

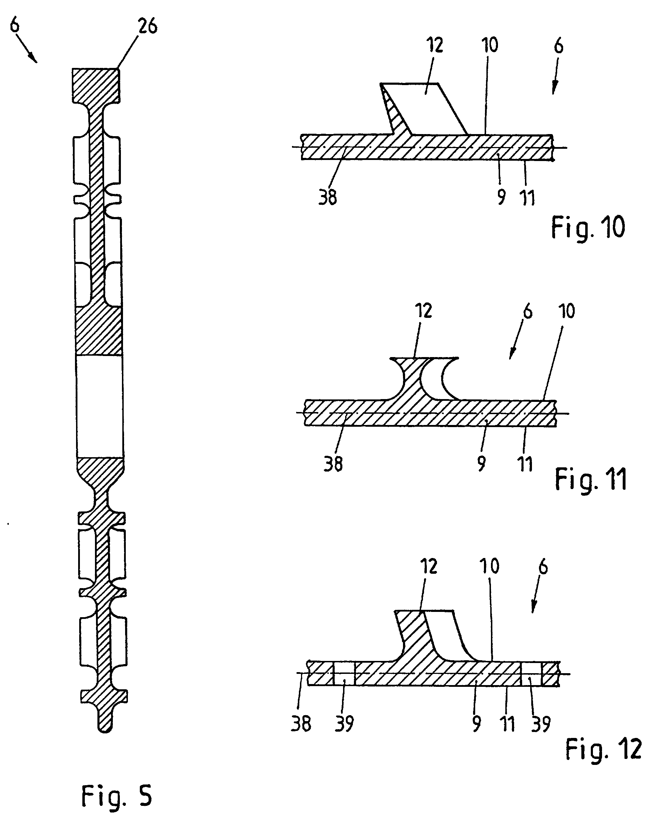

Die Figuren 10 bis 12 zeigen Detailquerschnitte durch die Scheibe 6 mit ihrem Grundkörper 9. Es ist nur jeweils eine Mischschaufel 12 auf der Oberseite 10 des Grundkörpers 9 dargestellt, obwohl natürlich auch auf der Unterseite 11 entsprechende Mischschaufeln angeordnet sind. Die Anordnung der Mischschaufeln 12 kann spiegelsymmerisch zu einer Mittelebene 38 ausgebildet sein. Man erkennt aus Figur 10, daß die Mischschaufel 12 auch geneigt zur Oberseite 10 bzw. Mittelebene 38 angeordnet sein kann, um die Mischwirkung zu verbessern. Die Mischschaufel 12 kann an ihrem freien Ende zugeschärft ausgebildet sein, um die Abstreifwirkung auf die Masse von der Temperierfläche 18 zu beeinflußen.

Figur 11 zeigt eine Ausführungsform, bei der die Mischschaufel 12 gerundet, also etwa pflugartig ausgebildet ist, so daß die Masseelemente beim Kontakt mit der Mischschaufel 12 kreisförmig umgewendet bzw. geführt werden. Figur 12 zeigt eine Ausführungsform, bei der Mischschaufel zwar geneigt zur Mittelebene 38, jedoch mit relativ großer Kontaktfläche an ihrem freien Ende relativ zu der Temperierfläche 18 angeordnet ist. Der Grundkörper 9 der Scheibe 6 kann mit Durchbrechungen 39 versehen sein. Diese Durchbrechungen 39 dienen der Gewichtseinsparung der Scheibe 6. Ein nennenswerter Durchtritt von Masse durch die Durchbrechungen 39 ist nicht beabsichtigt.

### BEZUGSZEICHENLISTE

- 1 -: Temperiersäule
- 2 -: Achse
- 3 -: Welle
- 4 -: Motor
- 5 -: Untersetzungsgetriebe
- 6 -: Scheibe
- 7 -: Temperierraum
- 8 -: Nabe
- 9 -: Grundkörper
- 10 -: Oberseite
- 11 -: Unterseite
- 12 -: Mischschaufeln
- 13 -: Deckel
- 14 -: Ring
- 15 -: Deckel
- 16 -: Spannschraube
- 17 -: Kammer
- 18 -: Temperierfläche
- 19 -: Masseeingang
- 20 -: Buchse

- 21 -: Pfeil
- 22 -: Aussparung
- 23 -: Pfeil
- 24 -: Pfeil
- 25 -: Masseausgang
- 26 -: Vorsprung
- 27 -: Kreisring
- 28 -: Masseelement
- 29 -: Pfeil
- 30 -: Bewegungspfad
- 31 -: Abstreifkante
- 32 -: Ablenkflächen
- 33 -: Fläche
- 34 -: Schrägwinkel
- 35 -: Gruppe
- 36 -: Gruppe
- 37 -: Gruppe
- 38 -: Mittelebene
- 39 -: Durchbrechung

## Patentansprüche

1. Vorrichtung zum kontinuierlichen Aufbereiten von zu verarbeitenden kakaobutterhaltigen oder ähnlichen fetthaltigen Massen, insbesondere Schokolademasse, mit einer Temperiersäule (1), die mehrere, einen Zylinder bildende, übereinander angeordnete und an einen Kreislauf für ein Temperiermedium angeschlossene Kammern (17) aufweist, wobei zwischen zwei benachbarten Kammern ein im wesentlichen von Temperierflächen (18) der beiden Kammern (17) begrenzter und von der Masse durchströmter Temperierraum (7) gebildet ist, in dem eine angetriebene Scheibe (6) angeordnet ist, die auf ihrem äußeren oder inneren Umfang Aussparungen (22) für den Übertritt der Masse von der Unterseite (11) der Scheibe auf deren Oberseite (10) und auf ihren beiden Oberflächen Abstreiferstege aufweist, die berührungslos an den Temperierflächen (18) der Kammern (17) entlangstreichen und dabei die Masse von der Temperierfläche (18) abstreifen, **dadurch gekennzeichnet, daß** als Abstreiferstege eine Vielzahl von Mischschaufeln (12) vorgesehen ist, die eine kleinere Erstreckung als der Radius der Scheibe (6) aufweisen und an der Oberseite (10) und der Unterseite (11) der Scheibe (6) über den Umfang der Scheibe ohne gegenseitige Kanalbildung verteilt angeordnet sind.

2. Vorrichtung nach Anspruch 1, **dadurch gekennzeichnet, daß** auf der Oberseite (10) und der Unterseite (11) der Scheibe (6) jeweils zwei Arten der Mischschaufeln (12) über den Umfang der Scheibe (6) verteilt vorgesehen sind, von denen die eine Art auf die Masse eine radial nach außen gerichtete und die andere Art eine radial nach innen gerichtete Mischbewegung ausübt.

3. Vorrichtung nach Anspruch 1 oder 2, **dadurch gekennzeichnet, daß** die Mischschaufeln (12) auf der Scheibe (6) gruppenweise auf Kreisringen (27) angeordnet sind.

4. Vorrichtung nach Anspruch 3, **dadurch gekennzeichnet, daß** die Mischschaufeln (12) auf den Kreisringen (27) mit nacheinander von innen nach außen und von außen nach innen wechselnder Mischrichtung angeordnet sind.

5. Vorrichtung nach einem der Ansprüche 1 bis 4, **dadurch gekennzeichnet, daß** die Mischschaufeln (12) unter aneinander anschließender Überdeckung über den Umfang der Scheibe (6) verteilt angeordnet sind, so daß bei einer Umdrehung der Scheibe (6) die beiden Temperierflächen (18) vollständig abgestreift werden.

6. Vorrichtung nach einem der Ansprüche 1 bis 5, **dadurch gekennzeichnet, daß** die Mischschaufeln (12) als reine Mischschaufeln ohne nennenswerte Förderwirkung ausgebildet sind.

7. Vorrichtung nach einem der Ansprüche 1 bis 6, **dadurch gekennzeichnet, daß** die Mischschaufeln (12) als schräg zur Umfangsrichtung der Kreisringe (27) angeordnete und geradlinig verlaufende Pflugstege ausgebildet sind.

8. Vorrichtung nach einem der Ansprüche 1 bis 7, **dadurch gekennzeichnet, daß** die Mischschaufeln (12) auf den einzelnen Kreisringen (27) in Umfangsrichtung mit etwa gleichem Abstand angeordnet sind.

9. Vorrichtung nach einem der Ansprüche 1 bis 8, **dadurch gekennzeichnet, daß** die Mischschaufeln (12) auf den einzelnen Kreisringen (27) in radialer Richtung von innen nach außen mit von Kreisring zu Kreisring kleiner bemessenen Schrägwinkeln (34) angeordnet sind.

10. Vorrichtung nach Anspruch 1, **dadurch gekennzeichnet, daß** die auf dem äußeren Umfang der Scheibe (6) angeordneten Aussparungen (22) für den Übertritt der Masse von der Unterseite (11) der Scheibe (6) auf deren Oberseite (10) über den Umfang der Scheibe (6) durchgehend vorgesehen sind.

## Claims

1. An apparatus for continuously processing masses containing cocoa butter or similar fats, especially a chocolate mass, comprising:
a tempering column (1) having a plurality of tempering chambers (17) forming a cylinder and being arranged one above the other including tempering surfaces and being interconnected for the flow of a tempering medium;
a mass chamber (7) being positioned between two adjacent chambers (17) each and having tempering surfaces (18);
a driven disc (6) being arranged inside each mass chamber and including openings (22) allowing for a passage of the mass to be tempered from the bottom side (11) toward said top side (10);
scrapers being arranged on the discs but without getting in direct contact to the tempering surfaces (18) of the chambers (17) when driven, and taking off mass from the tempering surfaces (18);
wherein
a majority of mixing blades (12) forming the scrapers is provided, the mixing blades having a length which is less than the radius of the disc (6) and being positioned on the top side (10) and on the bottom side (11) of the disc (6) in a distributed manner with respect to the circumference of the disc without mutual channels being formed between said mixing blades.

2. The apparatus of claim 1, wherein two different kinds of mixing blades (12) are arranged both on the top side (10) and on the bottom side (11) in a distributed manner with respect to the circumference of the disc (6), the first kind of mixing blades having a mixing effect in a radial outside direction of the discs, and the second kind of mixing blades having a mixing effect in a radial inside direction of the discs.

3. The apparatus of claim 1 or 2, wherein the mixing blades (12) are arranged about the disc (6) in groups on a plurality of circular rings (27).

4. The apparatus of claim 3, wherein the mixing blades (12) positioned on a plurality of circular rings (27) are arranged to have a mixing effect changing from an inward to an outward direction and vice versa.

5. The apparatus of one of the claims 1 to 4, wherein the mixing blades (12) are arranged about the circumference of the disc (6) in an overlapping arrangement to completely take the mass to be tempered off said tempering surfaces (18) during one rotation of the disc (6).

6. The apparatus of one of the claims 1 to 5, wherein the mixing blades (12) are designed as pure mixing blades not providing a substantial conveying motion for the mass to be tempered.

7. The apparatus of one of the claims 1 to 6, wherein the mixing blades (12) are designed to be rectilinear, and they are arranged at an inclination angle with respect to the circumferential direction of the circular rings (27).

8. The apparatus of one of the claims 1 to 7, wherein the mixing blades (12) are arranged on the circular rings (27) to be about equally spaced apart about the circumference of the disc.

9. The apparatus of one of the claims 1 to 8, wherein the mixing blades (12) are arranged on the circular rings (27) with decreasing inclination angles (34) in radial direction from inward to outward.

10. The apparatus of claim 1, wherein the openings (22) arranged about the circumference of the disc (6) allowing for a passage of the mass to be tempered from the bottom side (11) toward the top side (10) are arranged to extend about the entire circumference of the disc (6).

## Revendications

1. Dispositif de préparation et mise en oeuvre continue de masses contenant du beurre de cacao ou des graisses analogues, en particulier de masse de chocolat, comprenant une colonne de températion (1) qui présente plusieurs chambres (17) disposées l'une au-dessus de l'autre, formant un cylindre et raccordées à un circuit de fluide de températion, une chambre de températion (7) essentiellement limitée par des surfaces de températion (18) des deux chambres (17) et traversée par la masse étant formée entre deux chambres adjacentes (17), dans laquelle un disque entraîné (6) est disposé, lequel présente à sa périphérie externe ou interne des évidements (22) pour le passage de la masse de la face inférieure (11) du disque vers sa face supérieure (10) et sur ses deux surfaces des nervures de raclage qui passent sans contact le long des surfaces de températion (18) des chambres (17) et ce faisant raclent la masse de la surface de températion (18) et 1a mélangent, **caractérisé en ce qu'**un grand nombre de palettes de mélange (12) sont prévues comme nervures de raclage, qui présentent une longueur inférieure au rayon du disque (6) et sont réparties à la périphérie du disque sur la face supérieure (10) et la face inférieure (11) du disque (6) sans former de canaux entre elles.

2. Dispositif suivant la revendication 1, **caractérisé en ce que** deux types de palettes de mélange (12) sont respectivement prévues réparties à la face supérieure (10) et à la face inférieure (11) du disque (6) sur la périphérie du disque (6), dont un type exerce un mouvement de mélange orienté radialement vers l'extérieur sur la masse et l'autre un mouvement de mélange orienté radialement vers l'intérieur.

3. Dispositif suivant la revendication 1 ou 2, **caractérisé en ce que** les palettes de mélange (12) sont disposées sur le disque (6) en groupes sur des anneaux de cercle (27).

4. Dispositif suivant la revendication 3, **caractérisé en ce que** les palettes de mélange (12) sont disposées sur les anneaux de cercle (27) avec une direction de mélange orientée alternativement de l'intérieur vers l'extérieur et de l'extérieur vers l'intérieur.

5. Dispositif suivant l'une des revendications 1 à 4, **caractérisé en ce que** les palettes de mélange (12) sont disposées à la périphérie du disque (5) avec recouvrement mutuel entre elles, de sorte que lors de la rotation du disque (6) les deux surfaces de températion (18) sont intégralement raclées.

6. Dispositif suivant l'une des revendications 1 à 5, **caractérisé en ce que** les palettes de mélange (12) sont conçues comme pures palettes de mélange sans effet significatif de transport.

7. Dispositif suivant l'une des revendications 1 à 6, **caractérisé en ce que** les palettes de mélange (12) sont conçues comme socs de charrue disposés en oblique par rapport à la direction tangentielle aux anneaux de cercle (27) et s'étendant en ligne droite.

8. Dispositif suivant l'une des revendications 1 à 7, **caractérisé en ce que** les palettes de mélange (12) sont disposées à espacement à peu près constant sur les différents anneaux de cercle (27) en direction tangentielle.

9. Dispositif suivant l'une des revendications 7 à 8, **caractérisé en ce que** les palettes de mélange (12) sont disposées en direction radiale de l'intérieur vers l'extérieur sur les différents anneaux de cercle (27) avec des angles d'inclinaison (34) de plus en petits d'un anneau de cercle à l'autre.

10. Dispositif suivant la revendication 7, **caractérisé en ce que** les évidements (22) disposés à la périphérie extérieure du disque (6) pour le passage de la masse de la face inférieure (11) du disque (6) à sa face supérieure (10) sont prévus en continu à la périphérie du disque (6).
